(19) **Europäisches Patentamt**

**European Patent Office**

**Office européen des brevets**

(11)  **EP 0 777 969 B1**

(12)  **EUROPEAN PATENT SPECIFICATION**

(45) Date of publication and mention
of the grant of the patent:
**09.07.2003   Bulletin 2003/28**

(51) Int Cl.[7]: **A23C 9/154**, A23L 1/0522,
A23P 1/16, A23C 9/137

(21) Application number: **96203216.5**

(22) Date of filing: **18.11.1996**

(54) **Aerated sour food product and process for preparing such food products**

Schaumiges gesäuertes Nahrungsmittel und Verfahren zu dessen Herstellung

Produit alimentaire acide et aéré et procédé de sa préparation

(84) Designated Contracting States:
**BE DE DK FR GB NL SE**

(30) Priority:  **17.11.1995  NL 1001689**

(43) Date of publication of application:
**11.06.1997   Bulletin 1997/24**

(73) Proprietor: **Friesland Brands B.V.**
**7943 PE Meppel (NL)**

(72) Inventors:
• **Heuvelman, Lambertus**
**7462 DR Rijssen (NL)**
• **Ebbekink, Jan Herman**
**7475 SJ Markelo (NL)**

(74) Representative:
**Smulders, Theodorus A.H.J., Ir. et al**
**Vereenigde**
**Postbus 87930**
**2508 DH Den Haag (NL)**

(56) References cited:
**EP-A- 0 059 617        EP-A- 0 244 294**
**EP-A- 0 274 348        EP-A- 0 649 599**
**WO-A-81/02377        DE-A- 4 032 698**
**FR-A- 2 093 720        FR-A- 2 242 033**
**FR-A- 2 259 539        US-A- 4 251 560**
**US-A- 4 609 554        US-A- 4 732 772**
**US-A- 4 981 709**

**Description**

The invention relates to an aerated sour food product and to a process for preparing such food product. In a preferred embodiment, the invention relates to a pourable, aerated, sour dessert.

As used in this specification and in the claims, the term "aerated food product" means food products having at least an overrun of 25%. The term "overrun" is defined as

$$\left[ \frac{\text{(density of the unwhipped product)}}{\text{(density of the whipped product)}} - 1 \right] \times 100\%$$

In fact, the term "overrun" means that so many gas bubbles are contained in the product that in comparison with the unwhipped product the volume of the product increases with the overrun.

Many food products possessing an aerated structure have already been known. In particular, reference is made to puddings of the bavarois type, mousses, whipped cream, and (egg white) foam products. The air bubbles contained in these aerated food products impose high requirements on the food product matrix surrounding the air bubbles. In order to obtain a rather stable aerated product - which is one of the principal requirements for industrial manufacture of these products - the matrix material is usually gelled (e.g. in bavarois puddings) or hardened (e.g. in hard egg white foam products). As is known, aerated products, such as whipped cream, are not shelf stable. In other words, the known, stable aerated products possess a firm coherent to more or less solid structure.

Besides, a product has been available for some time under the name of Luchtig Toetje® (Coberco, The Netherlands). This product having an overrun of about 70% is, in contrast with the known aerated products, liquid (pourable) over the whole service range, i.e. from right from the refrigerator (2-5°) to ambient temperature. This dessert, the matrix of which has a custard structure, has such a yield stress that in the package the air bubbles remain homogeneously distributed in the custard matrix, but the product can be poured out. The custard structure required for a stable foam structure contains a mixture of stabilizers substantially based on starch.

The known Luchtig Toetje® has a pH>6, in general a pH ranging from 6.5 to 6.7.

According to the invention there is now provided an aerated product which is pourable, keeps for at least 3-4 weeks in the refrigerator (0-10°C) without impairing the aerated structure, is moreover stable during transport and is sour thereby having a fresh taste. Especially the requirement that the contemplated product had to be sour gave rise to problems.

According to the invention there has now been found a stable, aerated product with keeping qualities, which product is pourable and sour.

More in particular the present invention relates to a stable, pourable product which product will keep for at least 3 weeks in the refrigerator (0-10°C) having a gas bubble content so that an overrun of at least 25% is obtained, which food product is sour, having a pH ranging from 3.0 to 5.2, in which product a for acid conditions modified starch is used in gelatinized form, and in which the starch globules are substantially reduced to microscopically invisible structures.

In a second aspect the invention relates to a process for preparing a stable sour product as defined in the previous paragraph, with keeping qualities, a thickener system active in acid conditions being added to a liquid sour food product, which system comprises modified starch, and which food product is subjected to a step in which the structure of the modified starch globules is substancially brought into a microscopically invisible form, into which sour product so much gas is brought that an overrun of at least 25% is obtained.

As used in this specification and in the claims, the term "food product with keeping qualities" means a food product which will keep in the refrigerator for at least 3 weeks. The food product according to the invention remains stable during storage. Moreover, the product is stable under the influence of shocks as they may occur during transport, even if the product according to the invention is transported at ambient temperature. Exactly as the known Luchtig Toetje® "pourable" means in this specification and in the claims that the product is already pourable in non-frozen condition, already immediately above its melting range, in any case at and above the refrigerator temperature. Products that are gellike at low temperatures and then become more or less liquid, as of the type described in FR-A-2 093 720, EP-A-0 244 294, and WO-A-81/02377, are not contemplated. These products are not pourable within the meaning of the present invention.

The products according to the invention are sour food products. The pH of these products usually ranges from 3.0 to 5.2. If the pH of this product has a value higher than 5.2, the fresh taste will be lost. Moreover, higher pH values are unfavourable from a microbiological viewpoint. The lower limit of 3.0 is substantially governed by the taste. Products having a pH below 3.0 are often experienced as too sour. In fact, this depends on the composition of the food products, e.g. on the presence or absence of buffering proteins. Thus, there is obtained a product having an excellent taste if on the basis of whey or ultrafiltration permeate there is prepared a product having a pH of about 3.0.

The aerated food product according to the invention is stable in the package, the air bubbles being homogeneously distributed in a matrix of the food product. In fact, the matrix is present in the package in a gel form, which gel must have so low a yield stress that upon slight movement the aerated food product begins to flow while retaining the aerated structure. Thus, the product can be poured from the package.

However, the yield stress must be high enough to be able to hold the air bubbles. In general, yield stresses ranging from 1 to 10 Pa are satisfactory. The yield stresses can be determined with a Rheometrics DSR rheometer, using parallel plates having a diameter of 40 mm, the shearing stress being gradually increased. The measuring temperature is 10°C.

Furthermore, the product according to the invention shows a pseudoplastic behaviour, the viscosity within the shearing rate range relevant to the consumer (10-100 $s^{-1}$) ranging from 0.5 to 10 Pa.s. Dynamic measurements at a frequency of 10 rad/s show that at stresses of about 10 Pa and less the food product according to the invention substantially has a solids character. At higher shearing stresses the food product becomes a liquid character.

If, e.g., a die is brought onto the food product according to the invention on which a force is exerted, the structure of the food product will not break, such as a gel; the die sinks into the food product. Thus, the food product according to the invention shows a liquid behaviour rather than a gel behaviour.

The products according to the invention have an overrun of at least 25%, preferably from 25 to 180 %, more preferably 30-120%, most preferably 50-80%. If the overrun is lower than 25% and higher than 120%, respectively too little and too much air is contained in the food product according to the invention, thereby insufficiently obtaining the pleasant desired mouthfeel of the food product according to the invention.

For whipping, preference is given to beating in nitrogen gas.

Besides, instead of nitrogen, air may also be used or any other gas (mixture) which substantially does not dissolve in the food product matrix and has a stable gas bubble structure. In fact, the advantages and characteristics of the food product according to the invention can also be obtained if the bubbles are formed from these gases other than nitrogen gas.

Preferably, the pH of these products is 3.5-5.0, most preferably 3.8-4.6. Known sour food products having a pH within this range are yoghurt, curd, and buttermilk, which products may all be used in the preparation of the products according to the invention.

In order to obtain a stable aerated food product, it is necessary to use thickeners which are stable and maintain their effect at the pH of the contemplated product. Such thickeners are known to the skilled worker and comprise modified starches for acid conditions, e.g. adipate-acetate modified starch (modification H of tapioca or waxy maize) or hydroxypropylphosphate modified starch (modification R of tapioca or waxy maize), xanthan gum, and gelatin. The thickeners to be used in the food products according to the invention are used in amounts so adjusted to each other that the food product does not, if at all, gel. Characteristic are amounts of about 1-5% by weight, more preferably 1,5-4% by weight, most preferably 2-4% by weight, e.g. 3-4% by weight of modified starch for acid conditions, 0.01-0.25% by weight, more preferably 0.05-0.20% by weight of xanthan gum, and 0.01-0.50% by weight, more preferably 0.07-0.30% by weight of gelatin.

It has been found essential that for acid conditions modified starch must be used. This starch must be homogenized very properly and is substantially not allowed to be contained in the final product in the form of gelatinized starch globules. This structure must be disturbed or otherwise destroyed. This step was very surprising. Normally, in the preparation of food products in which starches or starch derivatives are used as the principal stabilizers or thickeners, special care is taken in maintaining intact gelatinized starch globules. If the structure of the starch globules in, e.g., the preparation of custard is lost, there is obtained a product having an unduly low viscosity.

Gelatin is preferably also used in the thickener system present in the aerated products according to the invention. Gelatin has the advantages that during packaging it does not form a gel yet and that in the package it contributes to the yield stress.

It has been found necessary that during the preparation of the aerated food product according to the invention the food product is treated in a manner such that the modified starch used therein is substantially present in gelatinized form, the structure of the starch globules having disappeared. The invention therefore relates to a process for preparing a stable sour product with keeping qualities, having an overrun of at least 25%, a thickener system active in acid conditions being added to a liquid food product, which system comprises modified starch, and which mixture is subjected to a step in which the modified starch is (substantially) brought into the gelatinized form. In the resulting products, whole starch globules are hardly, if at all, present anymore; starch globules or parts thereof are hardly, if at all, observable with a microscope at a magnification of 100 x.

The liquid food product used as the starting product in the process according to the invention has a continuous aqueous phase.

The step in which the modified starch is substantially brought into the desired form is preferably a homogenization after the starch has been gelatinized under the influence of heating. A suitable homogenization pressure is about 50 kg/cm$^2$, although, in fact, any pressure above 25 kg/cm$^2$ is applicable. It is essential that the gelatinized starch is homogenized in the product very properly. Optimum homogenization pressures depend on the recipe of the product. Normally, a homogenization pressure of from 50 to 100 kg/cm$^2$ is satisfactory. When the homogenization pressure exceeds 125 or 150 kg/cm$^2$, more modified starch must usually be applied in order to obtain the desired effect. Besides, there may also be used other known processes for homogenizing the gelatinized starch in a manner such that no starch globules are distinguished under the microscpoe anymore, e.g. ultrasonic vibration and microfluidization.

In the food product prepared according to the invention, nitrogen gas or air - or another gas not dissolving in the food product - can be whipped before marketing. Although this is a preferred embodiment, air may also be beaten in by the consumer before consumption.

There are no special aids required for introducing air into the product obtained according to the above-described process. This may be done with all known whipping apparatuses, such as a Hobart®-mixer. Preferably, air is beaten in by using continuous whipping apparatuses, such as a Mondomix®. Besides, it takes some time before the product is sufficiently firm to hold air properly and to delay the coarsening of the aerated structure by disproportionation. After whipping, it must be allowed that the gas bubbles can grow for a while so that they are clearly visible to the naked eye.

The average gas bubble size is expressed as the known volume-surface diameter $d_{32}$. Immediately after whipping, the $d_{32}$ is about 200 µm. After a storage time of 3 weeks the $d_{32}$ was always found below 1000 µm and the $d_{32}$ value substantially remained between 500 and 700 µm during the storage time of the product.

The skilled worker knows that fats and oils inhibit foam formation. For this reason, it is desirable to first subject starting products containing oil or fat to a step in which fat particles are brought into a smallest possible form and to envelop them with an emulsifying material, e.g. by carrying out a homogenization step.

In a preferred embodiment the food product according to the invention is based on milk or products derived from milk. Such starting products may be sour, such as yoghurt, buttermilk, curd, and other fermented milk products. There may also be started from acidified dairy products, such as acidified milk, whey or ultrafiltration permeate of milk or whey. The acidification can be carried out with acids suitable for food products, such as citric acid, but also in other ways, such as with acid ion exchange, fermentation or combination of these methods.

If the above-mentioned starting products based on milk are used in the food product according to the invention, the product matrix obtains a custard-like structure around the air bubbles, resulting in that the consumer experiences the taste sensation of a kind of aerated yoghurt. It is not necessary according to the invention to add milk-foreign emulsifiers to these food products.

Products based on milk or derived from milk may be very suitably prepared by subjecting the starting material to a process known for the custard preparation and extending this process by a step in which the gelatinized starch structure is disturbed.

A characteristic process comprises the following steps. Milk is standardized at a desired fat content, e.g. 3%, by mixing whole and low-fat milk. The standardized milk is composed of homogenized milk, because otherwise the product is less properly whippable by the presence of too coarse fat particles. The homogenized standardized milk, to which a thickener mixture is added, is then heated and homogenized at 50 kg/cm$^2$. Subsequently, the milk is acidified in the known manner by using a yoghurt culture. After fermentation the resulting product is whipped with a suitable mixer.

The starting product may also be an already acid or acidified product, such as yoghurt. In that case, however, it is necessary to stabilize the proteins contained in the product with, e.g., pectin or carboxymethyl cellulose. Subsequently, - after addition of starch and other thickeners - heating (92°C, 5 sec.) may be carried out, following which there is homogenized at 50 kg/cm$^2$ and nitrogen gas is beaten in.

By using relatively little starch in the aerated product according to the invention, e.g. about 1.5% by weight, a kind of sour milk shake can be obtained.

The food product on the basis of milk or derived from milk may contain up to maximally 98% by weight of dairy proportion. It is not necessary, however, that the food product according to the invention contains a dairy proportion.

The present invention likewise comprises aerated pourable sauces which may contain a fat content of 0-30% by weight. Thus, by beating in air, French dry sauces and the like, which are relatively low in calories, can be obtained.

The acidity of the food product to be prepared may be adapted, if required, by adding an acid acceptable in food products, e.g. lactic acid or citric acid.

Besides, additives, such as aromas, colorants, cultures, sweeteners, vitamin and mineral mixes, preservatives, and other conventional additives may be used in the aerated food products.

The invention will now be described in detail, with reference to the example. Unless otherwise stated, percentages are always weight percentages.

Example 1

A milk having a fat content of 3% was composed from whole and low-fat milk. This standardized milk was heated to 65°C, homogenized at 200 kg/cm$^2$ and pasteurized for 20 seconds at 72°C.

Sugar, modified starch (Resistamyl E2; Amylum Group); xanthan (Keltrol F; Kelco Int. Ltd.), and gelatin (230 bloom; Gelatine Delft) were added to the homogenized milk, which led to a product having the following composition: milk 87.33%, sugar 9%, modified starch 3.4%, xanthan 0.07%, and gelatin 0.2%.

Subsequently, the mixture was heated and cooled in the manner known in the custard preparation. Then the resulting product was homogenized at a temperature of 73°C at 50 kg/cm$^2$. A microscopic investigation showed that the resulting product no longer contained microscopically visible gelatinized starch structures.

Subsequently, the homogenized product was cooled to 32°C, and a yoghurt culture was added. The inoculated milk product was fermented to a pH of 4.2. This product was cooled to 7°C while flowing. Subsequently, colorants and flavoring agents were added, and the product was stirred.

Before packaging in the final package the sour product was whipped in a Mondomix® to obtain a specific mass of 630 g/l.

Examples 2-6

A milk having a fat content of 3% was composed from whole and low-fat milk. This standardized milk was heated to 65°C, homogenized at 200 kg/cm$^2$ and pasteurized for 20 seconds at 72°C.

Sugar, Resistamyl E2, Keltrol F, and gelatin were added in the ratios of Example 1.

The resulting product was heated to 125°C, at which it was held for 10 seconds. Subsequently, it was cooled to 70°C, at which temperature a homogenization step was carried out at a pressure of 50 kg/cm$^2$. Then the homogenized product was cooled to 32°C. The product was inoculated with the starter of 1 st and RR (0.0125% + 0.0125%; CSK). The inoculated milk product was fermented to a pH of 4.2. This product was then cooled to 12°C while flowing.

Before packaging in the final package, the sour product was whipped in a Mondomix® to obtain different overruns and thus different specific masses, for which reference is made to the following table:

Table 1

| Example | specific mass | overrun |
|---------|---------------|---------|
| 2 | 0.63 g/ml | 70% |
| 3 | 0.83 g/ml | 30% |
| 4 | 0.72 g/ml | 50% |
| 5 | 0.56 g/ml | 90% |
| 6 | 0.51 g/ml | 110% |

After 1 week storage at 5°C , there were determined the viscosities at a shearing rate of 10 s$^{-1}$ and 100 s$^{-1}$ in Pa·s, the yield stress in Pa, the average gas bubble size $d_{32}$ in µm, and the pH. The measurement data are listed in Table 2.

Table 2

| Example number | Viscosity | | Yield stress | $d_{32}$ | pH |
|----------------|-----------|-------------|--------------|----------|------|
| | 10 s$^{-1}$ | 100 s$^{-1}$ | | | |
| 2 | 4.6 | 1.00 | 2.5 | 642 | 3.93 |
| 3 | 4.3 | 0.96 | 2.1 | --- | 3.99 |
| 4 | 4.3 | 0.90 | 2.0 | 529 | 3.96 |
| 5 | 4.2 | 0.90 | 1.6 | 618 | 3.98 |
| 6 | 4.0 | 0.88 | 1.6 | --- | 3.97 |

The viscosity of the products of Examples 2-6 was within the desired range. The taste of the products was generally considered good. The variants of Examples 3 and 4 were found to be less aerated, while the product of Example 6 was held to be very aerated.

Moreover, the products of Examples 2-6 were subjected to a transport test in which they were transported over 100 km at temperatures of 5, 10 and 20°C. The structure of the products was found to be substantially unchanged after transport. Only the products according to Examples 5 and 6, the products having the highest overrun, showed a slighty coarser structure after they were transported at 20°C. There was no question of any negative effect on the taste of the product.

For the embodiment of Example 2, the yield stress and air bubble size during storage in the refrigerator were examined in time. The yield stress was measured at 10°C. The data are listed in Table 3.

Table 3

| Measuring time | yield stress | gas bubble size $d_{32}$ |
|---|---|---|
| directly after whipping | 0.9 Pa | 203 μm |
| after 1 day | 1.4 Pa | 258 μm |
| after 1 week | 2.5 Pa | 642 μm |
| after 2 weeks | 2.5 Pa | 760 μm |
| after 3 weeks | 2.2 Pa | 881 μm |

The average diameter of the gas bubbles was initially found to be very fine. Although the gas bubbles became larger in time, yet the coarsening of the structure remained limited. Even after three weeks the gas bubble size was still considered excellent.

As a general conclusion, it can be stated that products according to the invention having an overrun of from 30 to 110% are stable enough to be suitable for storage for at least 3 weeks and to be transported.

Examples 7 and 8

By using the process of Examples 2-6, aerated sour products were prepared in which the amount of Resistamyl E2 was increased (Example 7) and reduced (Example 8). The amount of standardized milk was adapted by way of compensation. In particular, the compositions of Example 7 and Example 8 contained respectively 3.7% and 3.1% Resistamyl E2 and 87.03% and 87.63% standardized milk.

The products were foamed in the Mondomix® until the specific mass of the products was 0.63 g/ml.

After 1 week storage at 5°C, there were determined the viscosities at shearing rates of 10 s$^{-1}$ and 100 s$^{-1}$ in Pa·s, the yield stress in Pa, the average gas bubble size $d_{32}$ in μm and the pH. The measurement data are listed in Table 4.

Table 4

| Example number | viscosity | | yield stress | $d_{32}$ | pH |
|---|---|---|---|---|---|
| | 10 s$^{-1}$ | 100 s$^{-1}$ | | | |
| 7 | 5.1 | 1.05 | 2.5 | 582 | 4.00 |
| 8 | 4.3 | 0.90 | 3.1 | 605 | 3.99 |

During storage a light degree of coarsening of the gas bubble structure occurred.

With respect to the viscosity the product of Example 7 was considered rather viscous. The product of Example 8 had a viscosity comparable with those of Examples 1-6.

The transport behaviour of both products was good; no coarsening of the structure occurred during transport at 5, 10 and 20°C.

It is concluded that via the content of modified starch the viscosity of the product can be adjusted without adversely affecting the other product properties.

Examples 9 and 10

In the manner of Examples 2-6, two sour aerated products were prepared from 88.53% UF milk permeate, 7.0% sugar, 4.20% Resistamyl E2, 0.07% Keltrol F, and 0.2% Gelatin 230 bloom (Example 9) and from 87.65% on 10% fat standardized milk, 9.0% sugar, 3.10% Resistamyl E2, 0.06% Keltrol F and 0.185% Gelatine 230 bloom (Example 10), which products were cooled to 8°C. The products were whipped until an overrun of 0.63 g/ml.

After 1 week storage at 5°C, there were determined the viscosities at shearing rates of 10 s$^{-1}$ and 100 s$^{-1}$ in Pa·s, the average gas bubble size $d_{32}$ in μm and the pH. The measurement data are listed in Table 5.

Table 5

| Example number | viscosity | | $d_{32}$ | pH |
|---|---|---|---|---|
| | 10 s$^{-1}$ | 100 s$^{-1}$ | | |
| 9 | 1.84 | 0.52 | 348 | 4.16 |
| 10 | 5.15 | 0.87 | 208 | 4.06 |

The product of Example 9 had the appearance of a beautiful, relatively thin foam, while the product of Example 10 was a beautiful thick foam. Both products were excellently pourable.

The foam structure of the product of Example 9 was very fine immediately after whipping. During storage, coarsening of the gas bubble structure slightly occurred, however without negatively affecting the properties and quality of the product. The foam product of Example 10 was fine in structure; the structure hardly changed during storage.

As regards the taste, the product of Example 9 was fresh, slightly sour; the product of Example 10 had a very rich, creamy, sour taste.

According to the invention there may therefore be prepared aerated sour products having a low protein and fat content and having a high fat content.

Example 11

A milk having a fat content of 3% was composed from whole and low-fat milk. This standardized milk was heated to 65°C, homogenized at 200 kg/cm$^2$ and pasteurized for 20 seconds at 72°C.

Sugar, Resistamyl E2, Keltrol F, and gelatin were added in the ratios of Example 1. Thus, there was formed a product having the following composition: 87.33 parts by weight of standardized milk, 9.0 parts by weight of sugar, 3.1 parts by weight of Resistamyl E2, 0.07 parts by weight of Keltrol F, and 0.20 parts by weight of Gelatin 200 bloom.

The resulting product was heated on a Sterilab to 125°C, at which it was held for 10 seconds. Subsequently, it was cooled to 70°C, at which temperature a homogenization step was carried out at a pressure of 50 kg/cm$^2$. Then the homogenized product was cooled to 32°C. The product was inoculated with 1 st and RR (0.0125% + 0.0125%; CSK). The inoculated milk product was fermented to a pH of 4.2. This product was then cooled to 12°C while flowing.

Subsequently, 0.30 parts by weight of Pectin YM 100 (Copenhagen Pectin) were added with stirring. Then the mixture was pasteurized at 90°C, at which it was held for 10 seconds. Then it was cooled to 8°C.

Before packaging in the final package, the sour product was whipped with a Mondomix® to obtain a specific mass of 0.63 g/ml. The properties of the product are shown in Table 6.

Table 6

| Viscosity | | $d_{32}$ | pH (fresh) | pH (3 weeks, 5°C) |
|---|---|---|---|---|
| 10 s$^{-1}$ | 100 s$^{-1}$ | | | |
| 3.8 | 1.0 | 223 | 4.08 | 4.06 |

The resulting product had a desired thickness and a very fine foam structure. The viscosity was such that there was obtained a properly pourable product with a pleasant, foamy mouthfeel. During three weeks of storage the fine foam structure was retained and the taste remained excellent.

Example 12

86.93 parts by weight of whole yoghurt were thinned by stirring. While properly stirring, 0.30 parts by weight of Pectin YM 100 were added. The whole was heated to 55°C and homogenized at 200 kg/cm$^2$. The homogenized mass was cooled to 10°C, following which 9.0 parts by weight of sugar, 3.5 parts by weight of C*Tex 06206 (Cerestar), 0.07 parts by weight of Keltrol F, and 0.20 parts by weight of Gelatin 230 bloom were added.

This mixture was heated to a temperature of 100°C and held at this temperature for 10 seconds. After cooling to 60°C it was homogenized at this temperature on 75 kg/cm$^2$. The homogenized mixture was cooled to 8°C and finally whipped by means of a Mondomix® to obtain a specific mass of 0.63 g/l.

The viscosity of the whipped product was 3.1 Pa·s (10 s$^{-1}$) and 0.80 Pa·s (100 s$^{-1}$). The size of the air bubbles, $d_{32}$, was 258 μm. The pH was 3.97.

Both freshly prepared and after storage the product was considered good as regards taste, structure, and pourability. The resulting foam is fine. The fineness of the foam was considered equal after 1, 2 and 3 weeks of storage.

**Claims**

1. A stable, pourable food product which product will keep for at least 3 weeks in the refrigerator (0-10°C) having a gas bubble content so that an overrun of at least 25% is obtained, which food product is sour, having a pH ranging from 3.0 to 5.2, in which product a for acid conditions modified starch is used in gelatinized form, and in which the starch globules are substantially reduced to microscopically invisible structures.

2. A food product according to claim 1, having a gas bubble content such that an overrun ranging from 25 to 180% is obtained.

3. A food product according to claim 1 or 2, having a yield stress ranging from 1 to 10 Pa.

4. A process for preparing a stable, sour product as defined in claim 1 with keeping qualities, a thickener system active in acid conditions being added to a liquid sour food product, which system comprises modified starch, and which food product is subjected to a step in which the structure of the modified starch globules is substantially brought into a microscopically invisible form, into which sour product so much gas is brought that an overrun of at least 25% is obtained.

5. A process according to claim 4, wherein the gas is brought into the food product before packaging.

6. A process according to claim 4 or 5, wherein milk or a product derived from milk is used as the liquid starting food product.

7. A process according to any of claims 4-6, wherein a liquid starting food product containing fat or oil is subjected to a homogenization in order to distribute the fat or oil phase as finely as possible.

8. A process according to any of claims 4-7, wherein the step in which the modified starch is substantially brought into a microscopically invisible form is a homogenization.

**Patentansprüche**

1. Stabiles fliessfähiges Nahrungsmittel, wobei das Mittel für mindestens 3 Wochen im Kühlschrank (0 bis 10°C) aufbewahrt werden kann, mit einem Gasbläschengehalt, so dass ein Überlauf von mindestens 25 % erhalten wird, wobei das Nahrungsprodukt sauer ist, mit einem pH im Bereich von 3,0 bis 5,2, wobei im Mittel eine für saure Bedingungen modifizierte Stärke in gelatinierter Form verwendet wird und wobei die Stärkeglobuli im wesentlichen auf mikroskopisch nicht-sichtbare Strukturen reduziert sind.

2. Nahrungsmittel gemäss Anspruch 1 mit einem Gasbläschengehalt, so dass ein Überlauf im Bereich von 25 bis 180 % erhalten wird.

3. Nahrungsmittel gemäss Anspruch 1 oder 2 mit einer Fliessspannung von 1 bis 10 Pa.

4. Verfahren zur Herstellung eines stabilen sauren Mittels gemäss Anspruch 1 unter Beibehaltung der Qualität, wobei ein Verdickungssystem, das unter sauren Bedingungen wirksam ist, zu einem flüssigen sauren Nahrungsmittel gegeben wird, das System umfasst modifizierte Stärke und das Nahrungsmittel wird einem Schritt unterworfen, in dem die Struktur der modifizierten Stärkeglobuli im wesentlichen auf eine mikroskopisch nicht-sichtbare Form gebracht wird, in das saure Mittel wird so viel Gas eingebracht, dass ein Überlauf von mindestens 25 % erhalten wird.

5. Verfahren gemäss Anspruch 4, wobei das Gas vor dem Verpacken in das Nahrungsmittel eingebracht wird.

6. Verfahren gemäss Anspruch 4 oder 5, wobei Milch oder ein von Milch stammendes Mittel als flüssiges Ausgangs-Nahrungsmittel verwendet wird.

7. Verfahren gemäss einem der Ansprüche 4 bis 6, wobei ein flüssiges Ausgangs-Nahrungsmittel, das Fett oder Öl enthält, einer Homogenisierung unterworfen wird, damit die Fett- oder Ölphase so fein wie möglich verteilt wird.

8. Verfahren gemäss einem der Ansprüche 4 bis 7, wobei der Schritt, bei dem die modifizierte Stärke auf eine im wesentlichen mikroskopisch nicht-sichtbare Form gebracht wird, eine Homogenisierung ist.

**Revendications**

1. Produit alimentaire stable, versable, lequel produit se conserve pendant au moins 3 semaines au réfrigérateur (0 à 10°C) possédant une teneur en bulles de gaz de sorte qu'on obtient un foisonnement d'au moins 25 %, lequel produit alimentaire est acidulé, possédant un pH allant de 3,0 à 5,2, produit dans lequel, pour des conditions acides, on utilise de l'amidon modifié sous forme gélatinisée, et dans lequel les globules d'amidon sont essentiellement réduits à des structures microscopiquement invisibles.

2. Produit alimentaire selon la revendication 1, possédant une teneur en bulles de gaz de façon à obtenir un foisonnement allant de 25 à 180 %.

3. Produit alimentaire selon la revendication 1 ou 2, possédant une limite de contrainte allant de 1 à 10 Pa.

4. Procédé pour préparer un produit acidulé stable selon la revendication 1, qui conserve ses qualités, un système épaississant actif dans des conditions acides étant ajouté à un produit alimentaire acidulé liquide, lequel système comprend de l'amidon modifié, et lequel produit alimentaire est soumis à une étape dans laquelle la structure des globules de l'amidon modifié est sensiblement introduit sous une forme microscopiquement invisible, produit acidulé dans lequel on introduit du gaz de façon à obtenir un foisonnement d'au moins 25 %.

5. Procédé selon la revendication 4, dans lequel le gaz est introduit dans le produit alimentaire avant le conditionnement.

6. Procédé selon la revendication 4 ou 5, dans lequel du lait ou un produit dérivé du lait est utilisé en tant que produit alimentaire liquide de départ.

7. Procédé selon l'une quelconque des revendications 4 à 6, dans lequel un produit alimentaire liquide de départ contenant de la graisse ou de l'huile est soumis à une homogénéisation afin de répartir la phase graisseuse ou huileuse aussi finement que possible.

8. Procédé selon l'une quelconque des revendications 4 à 7, dans lequel l'étape dans laquelle l'amidon modifié est essentiellement introduit sous une forme microscopiquement invisible est une homogénéisation.